# EUROPEAN PATENT APPLICATION

(11) **EP 4 414 259 A1**
(43) Date of publication of application: **14.08.2024**
(21) Application number: 22792833.0
(22) Date of filing: 03.10.2022
(51) Int. Cl.: B63B 77/10, B63B 1/10, F03D 13/25, B63B 35/44

(54) **SEMI-SUBMERSIBLE FLOATING PLATFORM FOR MARINE WIND TURBINE**

(30) Priority: 07.10.2021 ES 202130946
(71) Applicant: Hive Wind Energy, S.L., 48930 Getxo (Bizkaia) (ES)
(72) Inventor: PEÑA SAGASTUY, Jorge, 48930 Getxo (Bizkaia) (ES); LÓPEZ BECERRA, David, 48930 Getxo (Bizkaia) (ES); ZABALA CALVO, Iñaki, 48930 Getxo (ES); MARTIN SÁNCHEZ, José Luis, 48930 Getxo (ES); AMETLLER MALFAZ, Sergi, 48930 Getxo (ES)
(74) Representative: Igartua, Ismael
(86) International application number: PCT/ES2022/070624
(87) International publication number: WO 2023/057671

(57) **Abstract**

The invention describes a semi-submersible floating platform (1) comprising six columns (CV, CL) arranged forming a triangle such that three vertex columns (CV) are arranged at the vertices of the triangle and three side columns (CL) are arranged at the centers of the sides of the triangle, and wherein each column (CV, CL) is connected by a joining element (B) respective to each of the adjacent columns (CV, CL). Further, a side column (CL) is configured to support the wind turbine (A). The columns (CV, CL) that do not support the wind turbine (A) have a weight configured to maintain the center of mass of the set formed by the platform (1) and wind turbine (A) in the vertical of the hull center of the platform (1).

## Description

### OBJECT OF THE INVENTION

The present invention pertains to the field of marine wind power, and to the field of floating wind power.

The object of the present invention is a semi-submersible type floating platform for supporting a marine wind turbine.

### BACKGROUND OF THE INVENTION

Marine wind energy is a major technology in the current transition to more sustainable power generation systems. Marine wind power is based on the provision of wind turbines in the sea, where the wind resource is greater and more constant than on land, also presenting the additional advantage of reducing the visual and environmental impact in relation to the implementation of wind turbines on land. As marine wind power is deployed, the power of the wind turbines is increasing, being already much higher than that of the wind turbines used on land.

Until relatively recently, the solutions known in the field of marine wind power involved the support of wind turbines on platforms cemented in the sea floor, thus limiting their installation to marine areas with depths of less than approximately 50 meters. However, recently, solutions have been 25 developed that allow wind turbines to be arranged on floating platforms. An important advantage of floating wind technology is that the restriction relative to the depth is eliminated, being able to install the wind turbines in marine areas farther from the coast where the wind resource is greater, reducing at the same time the visual environmental impact and the affection to the marine soil.

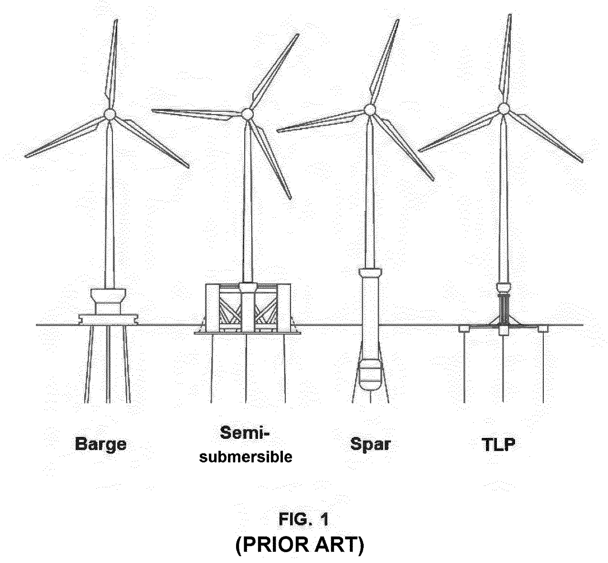

In the design of a floating wind installation, the configuration of the platform is a critical aspect. The choice of one type or another of floating platform will depend on the sea and seabed conditions, the winds of the area, the power of the wind turbine, the depth of the ports, the manufacturing facilities or the availability and price of materials and equipment. In this context, there are currently four main floating platform technologies: Barge, SPAR, TLP (Tensioned Legs Platform) and Semisubmersible. The main features of each of the four are briefly described below (see FIG. 1):
- Barge technology
   The concept is similar to that of a barge in terms of dimensions. That is, the length and beam size (length and width) is significantly larger than that of the draught (height). The floating platform has a lot of water contact surface, which is precisely what gives it stability. That is, in this type of platform, stability is given by its forms, using the so-called "stability per hull". Like ships, these platforms are made to move and avoid overexertion and strain on the structure. In order to minimize these movements, the platform can also be equipped with heaving plates, which are surfaces that are located below the waterline. In this solution, the tower, the nacelle and the blades of the wind turbine can be installed in port facilities, and then together be towed to the final location.
- Spar Technology
   In this model a large vertical element is used that has most of the weight at the lowest possible point to give stability. For example, if a vertical element in the form of a column or cylinder is used, one end of the column will have a much greater weight than the rest of its length. Since the center of gravity of this column is very close to said heavy end, the natural position of the column in the water will be vertical with the heavy end in the lowest position. The wind turbine is fixed at the upper end of the column, opposite said lower heavy end. In summary, in this solution the geometry of the column provides floatability, while placing the weight at the lowest point provides stability. This is known as "weight stability". As the turbines are getting bigger, this solution make very long cylinders to compensate for the weights, which makes this solution very difficult to manufacture, transport and install.
- TLP (Tensioned Legs Platform) Technology
   In this concept the platform is not really stable by itself. In order to achieve the objective of minimizing the dimensions to lower the manufacturing cost, the volume of the structure 30 above the water is the minimum possible, and the volume under the water is sufficient to have positive floatability, and the stability of the whole is given by the tension of the anchoring lines and the flotation itself. In this way, the volume of the platform, and therefore its mass, is as small as possible. Three-, four- or five-arm star geometry minimizes the volumes of each arm.
- Semi-submersible technology
   This design seeks to minimize the surface exposed to water, but always maximizing the volume, which is the one that really shifts the body of water and provides floatability. To do this, the volumes that grant floatability are structured into several floatability elements that are joined by structural elements to create a surface on which to install the turbine. The stability of this type of platform is given by the forms and the distance between columns. As in the case of several of the previous solutions, with the semi-submersible technology the tower, the nacelle and the blades of the wind turbine can be installed in port facilities, and then together be towed to the final location.

The existing semi-submersible type floating platforms present a number of drawbacks that negatively affect their manufacturing, operation and maintenance costs.

First, semi-submersible platforms often require a large amount of material, which dramatically increases their manufacturing costs. In addition, most semi-submersible platforms designed for marine wind are formed by columns that must be connected to each other by means of relatively complex structures of beams and stay rods. This implies the realization of very difficult connections, as for example in the case of non-perpendicular joints between some columns and others, thus preventing the standardization of both the elements that make up the platform and the joints. US2020391834A1 is an example of such a semi-submersible platform.

In addition, there is currently a tendency to use the minimum number of columns, which naturally implies very large column sizes. Thus, on platforms composed of three or four columns, as is common today, the height of each column can be about 30 meters for high-powered wind turbines (wind turbines of more than 10 MW). This size greatly complicates the manufacture of the platform due to multiple practical problems that ultimately result in added costs.

For example, the draught of the port where this type of platform is manufactured may not be sufficient to house columns of this size, which forces the platform to have a ballast system that allows its draught to be adjusted. On the other hand, the great height of the columns requires the use of complex lifting, tooling and scaffolding systems during the manufacture of the platform. Another disadvantage related to the large size of the columns is the need for the lower portion of them to have a mechanical strength that, in addition to supporting the weight that rests on the column, is able to support the hydrostatic pressure corresponding to the greater depth that will reach during its useful life. Document ES2728322T3 describes an example of such a platform where the columns have a height of 35 meters.

Another drawback of current semi-submersible platforms consisting of a few columns, for example three or four, is that stability needs require that such columns be separated from each other a great distance or that such columns acquire large diameters. For example, referring to the document ES2728322T3 mentioned above, the distance between columns is approximately 45 meters, the complete diameter of the structure being approximately 92 meters. The use of such long joining elements requires the arrangement of specific reinforcements (additional 5 elements, increase in thickness, or others) to ensure their structural integrity. In addition, the very limitations of space in the port where the platform is manufactured can constitute an added practical problem, limiting and even making the scalability of the concepts technically or economically unfeasible. In this context, scalability refers to the ability to increase the size of the platform so that it is able to hold more powerful and therefore heavier wind turbines. For the reasons described, the current designs are not scalable above a certain size.

On the other hand, in many concepts of semi-submersible platforms formed by a set of interconnected columns, the wind turbine tower is arranged on a central column or, in any case, on a central support structure. This implies that the shortest distance between the point where the wind turbine is arranged and the point of the platform closest to the dock (usually the central point of the joining element between two columns) is very large. By way of example, and continuing with document ES2728322T3, this distance can be approximately 30 meters. This makes it extremely difficult to assemble a high-powered wind turbine on the platform, since it requires the use of complex lifting means equipped with very large turning radii.

Another drawback that many of the current semi-submersible platforms present is related to the arrangement of the wind turbine at a point of the platform, usually located in the center thereof, which is not located on one of the columns that give floatability to the set. As a consequence, it is necessary to install a deck to support the wind turbine whose mechanical strength must be sufficient to transmit the loads to the columns, normally located on the periphery. This requires the use of specific techniques and materials for the deck that ensure this strength, which increases the cost of the platform as a whole. Document WO2014163501A1 is an example of such a floating platform.

On the other hand, the enormous dimensions of the platforms currently known complicate the access of inspection and maintenance personnel, which normally reach the platforms by ship. Indeed, the high height of the freeboard on these platforms hinders direct access through the means of berthing usually incorporated in the ship, such as extendable gangways. In addition, the great distance between columns of this type of platform requires the use of reinforcements and auxiliary structures in the gangways that allow the passage of said personnel between some columns and others. Again, document ES2728322T3 is an example of such a drawback.

In short, there is still in this field of technique the need for a novel semi-submersible floating platform that adequately solves all these drawbacks.

### DESCRIPTION OF THE INVENTION

The present invention discloses a semi-submersible floating platform that solves the above problems because of an essentially triangular design with at least six columns where the wind turbine rests on a column located in the center of one of the sides. The greater number of columns in relation to the prior art documents, as well as the positioning of the same in a carefully selected triangular configuration, allow to reduce the dimensions of columns and joining elements while maintaining good buoyancy, stability and behavior at sea, a high inertia in flotation, reduced dimensions and high structural efficiency together with a reduction in weight. The proposed design presents a plurality of additional advantages that will be described throughout the present application.

Some terms that will be used throughout the present description are briefly described below.
Column: Each of the elongated elements providing floatability to a semi-submersible platform. The columns may have any shape, for example, cylindrical shape, polygonal base prism shape or, in general, any solid shape formed by the displacement of a generatrix line along, and perpendicular to, a flat closed curve constituting the directrix. On a semi-submersible platform, the columns are arranged with their main axis in a verticaldirection, that is, perpendicular to the surface of the water.
Joining element: Each of the arms mechanically connecting one column to another according to a given platform configuration. The joining elements may have any shape, including one or more arms that may be connected by lattices or any other structure. Thearms may have any shape, including the cylindrical shape, polygonal base prism shape or, in general, solid shape formed by the displacement of a generatrix line along, and perpendicular to, a flat closed curve constituting the directrix. The joining arms may also take the shape of a beam of any suitable cross section.
Heaving plates: These are normally flat plates contained in a plane parallel to, and located below, the surface of the water. When the platform moves, the heaving plates drag the surrounding water and thus increase the term of the hydrodynamic coefficient of mass ofthe platform, so that the periods of the platform increase. Another important function of these plates is to dampen the movement of the platform, due to the energy dissipated by the drag of the water on the platform caused by the turbulence of the water when flowingaround its edges.
Ballast: This is a type of load that is arranged in tanks arranged inside the columns with the purpose of adjusting the center of gravity of the platform to improve its stability and correct heels and/or trims. The load can be a fluid that is housed in tanks arranged in thecolumns, such as seawater or freshwater (usually referred to as "*technical water*"), or thecolumn can include other heavy materials such as concrete. When the load used is a fluid, it can be transferred in a closed circuit, that is, by transferring water from one tank to another, or in an open circuit, that is, by exchanging water with the outside. The use of technical water is advantageous in relation to the use of sea water because it produces less corrosion of the equipment, ducts and warehouses through which it passes. In addition, the use of seawater requires the use of more protective measures (paints, printed currents or sacrificial anodes) in the tanks to prevent corrosion, which increases maintenance costs.
Vertical direction: In the context of the present invention, when the semi-submersible platform is in its natural position, the direction of the main axis of the columns coincides with the vertical direction, that is, it is perpendicular to the surface of the water. Naturally, here the surface of the water is considered as horizontal. Thus, throughout this document,terms such as "*upper*", "*lower*", "*above*", "*below*", and the like should be interpreted in accordance with this criterion.

The present invention refers to a semi-submersible floating platform for a marine wind turbine comprising six columns arranged essentially forming a triangle, such that three vertex columns are arranged at the vertices of the triangle and three side columns are arranged at the centers ofthe sides of the triangle. Each column is connected by a respective joining element to each of theadjacent columns. In this context, only the two side columns located on the sides that converge at said vertex are considered adjacent to each vertex column. Similarly, only the two vertex columns belonging to that side and the remaining two side columns are considered adjacent to each side column. That is, this configuration consists of six columns and nine joining elements therebetween, such that the vertex columns are connected by joining elements with two other columns, and the side columns are connected via joining elements with four other columns.

The joining elements of this new platform may, in principle, take any configuration. For example,each joining element may comprise one or more arms of any cross section, arranged horizontally or inclined, including lattices and other structures customary in this field. In any of these cases, all the joining elements will be equal in terms of their length, thus facilitating the standardization of the manufacturing and assembly operations of the platform.

On the other hand, it is understood that the triangle shape encompasses triangle-like shapes obtained by small displacements of the side columns to separate them from the joining line between vertex columns belonging to the side where the side column in question is located. Similarly, the side columns may not be located exactly in the center of the sides, being slightly displaced in either direction.

Additionally, in the described platform, a particular side column is configured to support the windturbine. This implies that said side column is prepared for the installation of the necessary meansfor the wind turbine to rest on it, such as, for example, a dedicated transition structure or piece. As, as described above, each side column is connected with four other columns, this configuration facilitates transmission of the loads along the entire structure in a particularly distributed manner.

Finally, those columns of the platform other than the side column configured to support the windturbine have a weight configured to bring the center of mass of the set formed by the platform andwind turbine to the vertical of the center of the hull of the platform. In this context, the "*hull center*" of the platform refers to the center of mass of the volume of water displaced by the platform. For example, in the specific case of a triangular platform of homogeneous structure (i.e., columns andjoining elements all equal to each other), the vertical of the hull center would coincide with the barycentre of the triangle. Thus, when designing the columns in such a way that the center of mass of the platform plus wind turbine assembly is in, or in any case as close as possible to, the vertical of the hull center (and, of course, below it), the inclination that occurs due to the imbalancecaused by the weight of the wind turbine in the column in question is reduced. To this end, as willbe described later in this document, the aforementioned columns may have tanks for housing water for the purpose of balancing the platform.

This structure confers upon the semi-submersible floating platform of the present invention a number of important advantages relative to the known semi-submersible platforms of the prior art, some of which are described below.

### Shorter columns

As the number of columns increases, smaller columns, that is, smaller ones, can be used. This has as a first consequence a significant reduction of the draught of the platform of the invention in relation to the draught necessary in conventional platforms formed by three or four columns. The maneuvers of manufacturing the platform and installation of the wind turbine can thus be carried out in a port without particular requirements in terms of depth. In addition, the reduced height of the columns, and therefore of the platform itself, reduces the needs of the constructive means, scaffolding, stands, tooling and lifting means.

By having a lower operational draught, the platform of the invention also allows the option of filling the ballast tanks with technical water using the means available in the port, being able to dispense with a ballast system and reducing the costs of the platform.

In addition, by reducing the depth that reaches the lower end of the columns, the requirements regarding the mechanical strength necessary to support the hydrostatic pressure are also reduced.

### Shorter, lighter and simpler joining elements

As the number of columns increases, the inertia in the flotation can be ensured without theneed for the joining elements to be as long as in the platforms of the prior art. Thus, the joining elements may be shorter than in such known platforms.

In addition, the wind turbine is arranged on a column located in the center of one side of thetriangle that is connected by four joining elements with four adjacent columns. Therefore, the distribution of the loads generated during the operation of the platform takes place between a greater number of joining elements of reduced length and, consequently, the structural requirements of the joining elements are relaxed. Complex reinforcements and large thicknesses in the joining elements are no longer necessary so that they can withstandthe mechanical stresses during the lifetime of the platform.

### Simplicity of the ballast system

Conventional platforms employing large columns may have such a huge draught that it prevents the use of certain ports. For this reason, such platforms may have a lower draughtduring their manufacture compared to the draught necessary to ensure their stability duringtheir lifetime. Subsequently, once they have been towed to the final location, seawater is used to ballast the platform and thus increase its draught until its operating value is reached. The provision of ballasting systems is an additional complication which implies a longer manufacturing and installation time, as well as economic costs associated with both installation and maintenance.

In the present invention, it is not necessary to modify the draught during the manufacture, towing, installation or operation of the platform. Due to the increase in the number of columns, the platform is completely stable even with its reduced draught. Therefore, the use of ballasting systems can be avoided.

### High standardization potential

The semi-submersible floating platform of the present invention is fundamentally formed by two equal elements that are repeated in the design: columns and joining elements. Each ofthese elements can be composed, in turn, of constructive blocks that connect to each other. In principle, both the size of the columns and the dimensions of the joining elements are equal. This allows a high degree of standardization in terms of the manufacturing and assembly operations of the platform, unlike what happens in many of the platform designs of the prior art. The simplicity of the design proposed in the invention allows to define it fundamentally with very few parameters, which allows to adapt the features of the platformto the conditions of each site without affecting the productive means or the logistical or supply requirements.

### Easy assembly of the wind turbine

In the semi-submersible floating platform of the present invention, the wind turbine is arranged on a column located essentially in the center of one of the sides of the triangle. Thus, by arranging the side of the column where said column is located in parallel next to the dock, the distance between the dock and the wind turbine is minimal, which facilitates the assembly of the wind turbine on the platform by avoiding the need for too sophisticated cranes and special equipment, particularly for high-powered wind turbines.

### Structural behavior

The great advantage with respect to the existing platforms, consisting of a configuration offew columns (three or four), is that the stresses are reacted by distributing the stress in more floating elements that are arranged closer, simplifying the structural requirements of the joining elements and of the columns themselves, avoiding the heavy scantling of pontoons, joining elements and covers of the configurations with a reduced number of columns

Likewise, the loads caused by the drag of the surrounding water are located in the strong elements of the structure, when in the configurations with submerged pontoon, characterized by its great length, it must transmit the forces caused to the flotation elements. Additionally, the total weight and volume of the columns is lower than the current concepts.

In principle, the joining elements may be located at any height of the columns as long as they connect the columns to each other in a sufficiently resistant manner and at the same time ensureadequate stability. For example, in a particularly preferred embodiment of the invention, the connections between the joining elements and the columns are located in a lower portion of the columns. Thus, the joining elements are not only all the same, but also are normally submerged during the lifetime of the platform.

This configuration is advantageous because it increases the floatability of the semi-submersible floating platform. In addition, since the joining elements are submerged, greater resistance is offered to the inclination of the platform. An additional advantage is that, by arranging the joiningelements at a reduced height in relation to the lower end of the columns, the assembly tasks are facilitated, reducing the needs of constructive means such as scaffolding, stands, tooling and lifting means.

Each joining element may comprise one or more arms of different shapes, such as square, rectangular, polygonal base prism shapes or beam shape any suitable cross section, such as forexample H-, T-, L-beam or the like. Preferably, the joining elements may be simple joining elements, that is, formed by a single arm. For example, according to a particularly preferred embodiment of the invention, each joining element comprises a single arm having a rectangular-shaped cross section.

This configuration is advantageous because it provides great resistance to bending while facilitating connections with the columns, thus facilitating assembly operations.

On the other hand, as discussed above, the columns of the platform of the invention may have any shape, such as cylinder shape. However, according to another preferred embodiment of theinvention, the columns have the shape of a polygonal base prism selected such that each connection between a joining element and a column takes place perpendicular to a lateral side of said column. For example, according to a particularly preferred embodiment, the platform has theshape of an equilateral triangle and the columns have the shape of a hexagonal base prism.

This configuration is advantageous because all the connections of the joining elements take placeagainst a flat surface of the columns and perpendicular to it. This favors the construction and reduces the capacity and training needs of the supply chain. In addition, this allows to reduce thelogistic needs of the blocks that make up the platform due to the use of standard flat sheet formats instead of curved sheet shapes that, for the dimensions of the columns, reduce the supply capacities and require greater logistic capacity.

On the other hand, the platform of the present invention may include passageways that allow the passage of people between columns for repair and maintenance tasks. These passageways can in principle be arranged in any location and with any configuration, although, according to anotherpreferred embodiment of the invention, the interior of the joining elements comprises passageways configured for the passage of people between some columns and others.

This configuration is advantageous because it avoids the need to install complicated and expensive aerial gangways between columns, as happens in many of the known designs of platforms of this type. In the present invention, it is much simpler and more economical to includeinside the joining elements a man passage that allows the passage between columns. In addition, the risk of falling into the water during inspection and maintenance operations is reduced.

In principle, the columns of the platform other than that supported by the wind turbine can have any configuration as long as they manage to locate the center of mass of the set formed by the platform plus wind turbine in the vertical of the hull center of the platform. For example, such columns may have thicker walls or contain concrete to increase their weight by the required magnitude.

However, in a particularly preferred embodiment of the invention, the columns other than those supporting the wind turbine comprise ballast formed by technical water or seawater. This technicalor seawater would be accommodated in warehouse arranged in these columns. For example, thethree columns that do not belong to the side where the wind turbine is supported, can have interior tanks to accommodate a volume of water sufficient to balance the center of mass of the set formedby the platform plus wind turbine. Optionally, it would be possible that the two vertex columns onthe side of the platform where the column that supports the wind turbine is also had internal tanksintended to accommodate water to balance the center of mass of the set. Also optionally, the column that supports the wind turbine could have a tank to provide greater flexibility in terms of the balance of the center of mass of the platform.

This configuration is advantageous because it constitutes a simple solution to the problem of balancing the weights of the columns, since the water can be supplied directly with the portequipment.

According to yet another preferred embodiment of the invention, the platform may comprise an active ballast system for transferring water from the tanks from one column to another during thelifetime of the platform to decrease the inclinations of the platform.

According to yet another preferred embodiment of the invention, the platform further comprisesheaving plates. The heaving plates can be fixed to the joining elements or to the columns to improve their mechanical strength without the need to use dedicated structures or supports.

According to a particularly preferred embodiment of the invention, the platform comprises inner heaving plates arranged between stretches of contiguous joining elements, wherein said stretches are adjacent to the column to which both joining elements are connected. Furthermore, said inner heaving plates do not extend outside the triangle of the platform. For example, the innerheaving plates can be triangular, as appropriate to fill the space between stretches of contiguousjoining elements in the area near the common column to which they are connected.

According to a preferred embodiment of the invention alternative to the foregoing, the platform comprises outer heaving plates radially protruding from the vertex columns essentially in all directions. Thus, at least a portion of said outer heaving plates extends outside the triangle of theplatform. For example, the outer heaving plates have a polygonal or circular shape.

### BRIEF DESCRIPTION OF THE DRAWINGS

Fig. 1 shows a schematic view of the different types of floating platform currently known.
Figs. 2a and 2b respectively show a plant and a elevation of an example of semi-submersible floating platform according to the present invention.
Figs. 3a and 3b respectively show a plant and a elevation of another example of semi-submersiblefloating platform according to the present invention.
Figs. 4a-4e show perspective views of examples of semi-submersible floating platform with different configurations of the heaving plates and the joining elements between the columns.
Figs. 5a-5f show more perspective views of examples of a semi-submersible floating platform with different configurations of the heaving plates and the joining elements between the columns.
Fig. 6 shows a perspective view of the aspect of a semi-submersible floating platform accordingto the present invention already located in its final location and with the wind turbine assembled.

### PREFERENTIAL EMBODIMENT OF THE INVENTION

Examples of semi-submersible floating platforms (1) according to the present invention are described below with reference to the accompanying figures.

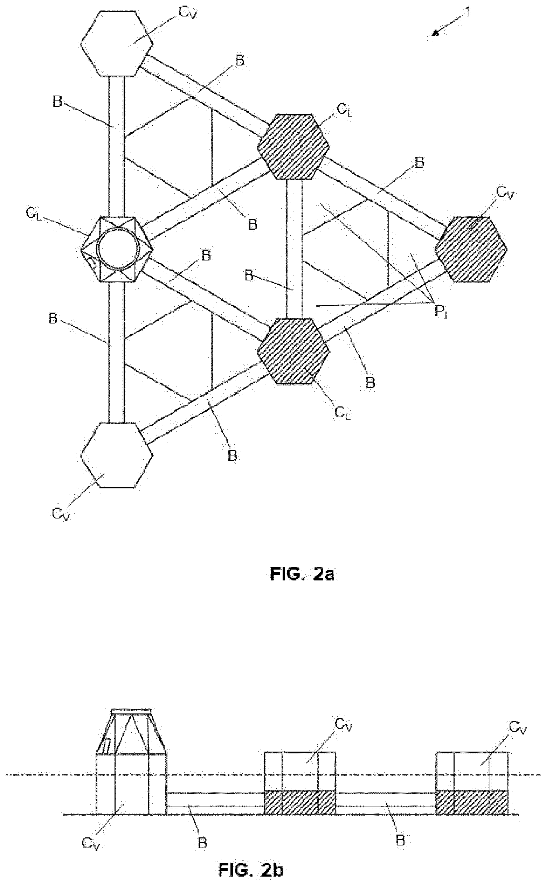

Figs. 2a and 2b respectively show a plant and a elevation of an example of semi-submersible floating platform (1). As can be appreciated, the platform (1) has a structure formed by six columns (C_{V}, C_{L}) arranged so as to form an equilateral triangle. Three vertex columns (C_{V}) are arranged at the vertices of the equilateral triangle, and three side columns (C_{L}) are arranged at the center of the sides of the equilateral triangle. In this example, the columns (C_{V}, C_{L}) have hexagonal cross-section whose height is approximately 12 meters, although in general its height can be between approximately 10 meters and 15 meters for high-powered wind turbines (A).

In this triangular structure, the columns (C_{V}, C_{L}) adjacent to each other are connected by a set of nine joining elements (B) formed by straight arms of rectangular cross-section and whose longitudinal axes are contained in a plane perpendicular to the axis of the columns (C_{V}, C_{L}). In particular, for each vertex column (C_{V}) only the two side columns (C_{L}) located in the center of the sides that converge with the vertex of the triangle where said vertex column (CV) is located are considered adjacent. Therefore, in each vertex column (C_{V}) two joining elements (B) converge that join it with two side columns (C_{L}). In turn, for each side column (C_{L}) the two vertex columns (C_{V}) located at the ends of the side to which it belongs and the remaining two side columns (C_{L}) of the structure are considered adjacent. That is, in each side column (C_{L}) four joining elements (B) converge, of which two elements (B) join it with two vertex columns (C_{V}) and two other elements (B) join it with two side columns (C_{L}). The position of the columns (C_{V}, C_{L}) at the vertices and at the centers of the sides of the triangle ensures that all the joining elements (B) have the same length. In this example, each joining element (B) measures approximately 30 meters, although its length can be between 20 meters and 40 meters.

The connection point between the joining elements (B) and the columns (C_{V}, C_{L}) is located near the lower end of the columns (C_{V}, C_{L}). Thus, the joining elements (B) are below the water level when the platform (1) is in use, as shown in Figs. 2b (the waterline is shown by dashed line). Furthermore, since the platform (1) as a whole has an equilateral triangle shape, an adequate orientation of the hexagonal columns (C_{V}, C_{L}) ensures that each and every one of the connections between columns (C_{V}, C_{L}) and joining elements (B) take place in perpendicular.

The side column (C_{L}) located on the left side in Fig. 1 is configured to support the wind turbine (A). In this example, this mainly implies that on said side column (C_{L}) a transition piece is arranged between the hexagonal shape of the upper end of the column and the circular shape of the base of the wind turbine tower (A). To prevent the platform (1) from inclining with the weight of the wind turbine (A), the three columns (C_{V}, C_{L}) thereof that do not belong to the side where the side column (C_{L}) that the wind turbine (A) will support comprise a ballast. That is, each of the columns (C_{V}, C_{L}) that do not belong to the left side of the platform (1) according to the arrangement of Fig. 2a comprises a technical water tank whose volume is calculated to maintain the center of gravity of the set formed by the platform (1) and the wind turbine (A) in the vertical of the hull center of the platform (1), which in this example coincides with the barycentre of the triangle.

The platform (1) shown in Figs. 2a and 2b further comprises a set of heaving plates (PI) contained in the plane of the joining elements (B). In particular, this example includes nine essentially triangular heaving plates (PI) that do not protrude outside the platform plant (1), and that are located between the sections of the joining elements (B) near the columns (C_{V}, C_{L}) in which they converge. In other words, each pair of contiguous joining elements (B) is joined by a heaving plate (PI) triangular in the zone near the column (C_{V}, C_{L}) where they converge, with the exception of the pairs of joining elements (B) that connect both side columns (C_{L}).

The platform (1) shown in Figs. 2a and 2b further comprises a set of heaving plates (P_{I}) containedin the plane of the joining elements (B). In particular, this example includes nine essentially triangular heaving plates (P_{I}) that do not protrude outside the platform plant (1), and that are located between the sections of the joining elements (B) near the columns (C_{V}, C_{L}) in which they converge. In otherwords, each pair of contiguous joining elements (B) is joined by a heaving plate (P_{I}) triangular in the zone near the column (C_{V}, C_{L}) where they converge, with the exception of the pairs of joining elements (B) that connect both side columns (C_{L}).

As mentioned earlier in this document, this platform (1) is very advantageous due to its high standardization capacity, both in terms of the elements that make it up and the manufacturing processes. The platform (1) is fundamentally formed by three identical elements that are repeated: columns (C_{V}, C_{L}), joining elements (B) and heaving plates (P_{I}). In addition, the connections between joining elements (B) and columns (C_{V}, C_{L}) are all perpendicular. In any case, note that this is only an example, and that it is possible that the elements are not all equal according to the structural needs of the platform (1).

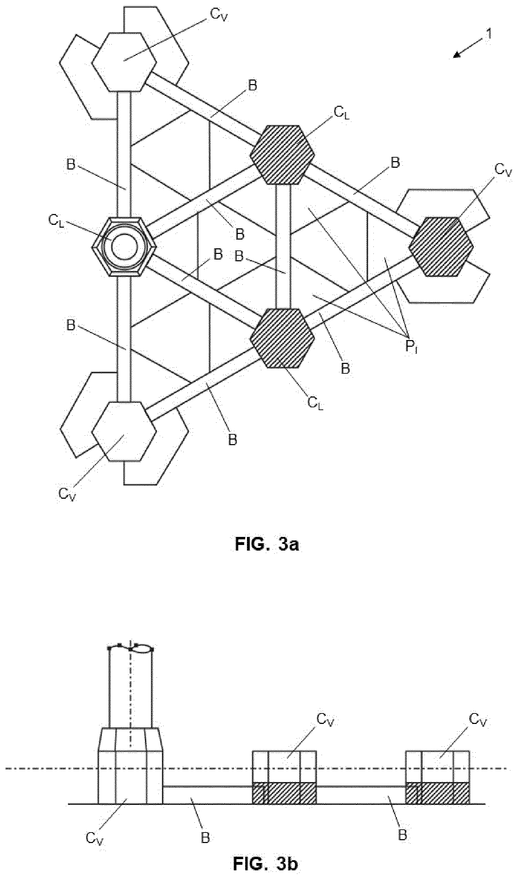

Figs. 3a and 3b show another example of a platform similar to that shown in Figs. 2a and 2b except that it further comprises heaving plates (P_{E}) that protrude radially from the end of the lowerend of each of the vertex columns (C_{V}) of the platform (1), and that have a hexagonal shape similar to that of the columns (C_{V}, C_{L}) but of greater size. Each of these heaving plates (P_{E}) has a discontinuity to allow the passage of a anchoring line of the platform (1).

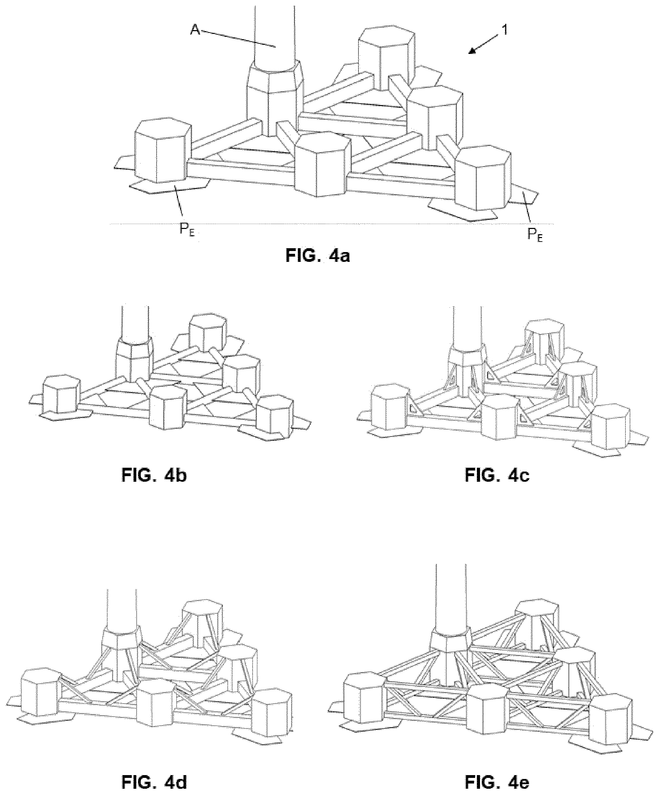

Figs. 4a to 4e show other examples of a platform (1) substantially the same as that shown in Figs. 2 and 3 with the exception of the configuration of the heaving plates and the elements (B).

In Fig. 4a, the platform (1) has simple joining elements (B) formed by a single horizontal arm of rectangular cross-section whose lower surface essentially coincides with the surface of the lower end of the columns (C_{V}, C_{L}). This platform (1) has outer heaving plates (P_{E}) located in the vertex columns (C_{V}) and that protrude from the platform plant (1). Specifically, these are three heaving plates (P_{E}) that protrude radially from the lower end of each of the vertex columns (C_{V}) of the platform (1), and that have a hexagonal shape similarto that of the columns (C_{V}, C_{L}) but of greatersize. This platform (1) also has internal heaving plates (P_{I}) of a triangular shape that are arranged in the connection zones of each pair of joining elements (B) with the respective column (C_{V}, C_{L}).

In Fig. 4b, the platform (1) has simple joining elements (B) formed by a single horizontal arm of circular cross-section. The heaving plates are similar to those shown in Figs. 3a and 3b, includinginner heaving plates (P_{I}) in the area where each pair of joining elements (B) join a column (C_{V},C_{L}) and outer heaving plates (P_{E}) of similar hexagonal shape that protrude from the vertex columns (C_{V}) and provided with a discontinuity to allow the passage of a anchoring line of the platform (1).

The arrangement of Fig. 4c is similar to that of Fig. 4a, although with diagonal reinforcements in shape of a bracket in the connection zones between the joining elements (B) and the columns (C_{V}, C_{L}). The configuration of Fig. 4d is similar to that of Fig. 4c, although the diagonal reinforcements are formed by inclined bars. Fig. 4e shows a configuration where the joining elements are lattices comprising two parallel bars that connect the columns respectively in two planes located near the lower end and the upper end of the columns.

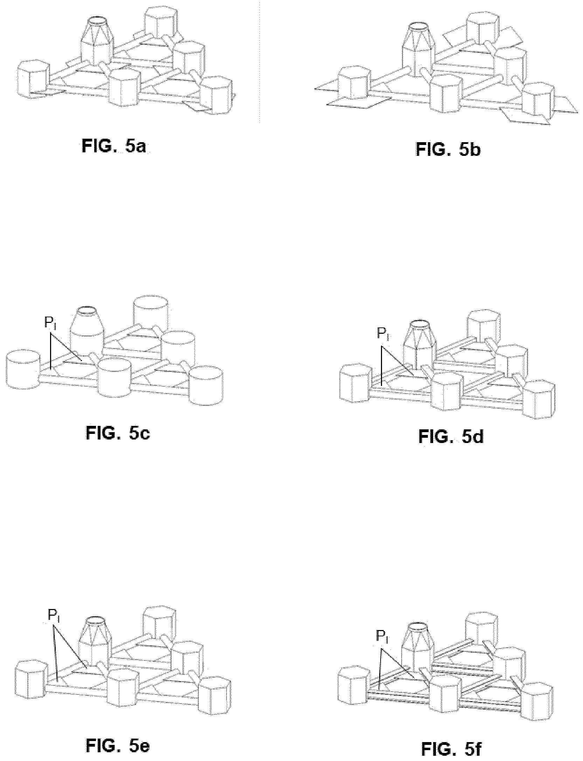

Figs. 5a-5f shows another set of different platform configurations (1) according to the invention with regard to the heaving plates (P_{I}, P_{E}) and the cross-section of the joining elements (B). As can be seen in these figures, it is possible to combine internal heaving plates (P_{I}) that do not protrude from the platform plant (1), such as those shown in Figs. 2a and 2b, and outer heaving plates (P_{E}) that protrude from it, such as those shown in Figs. 3 and 4, according to different configurations. It is also possible to use non-cylindrical joining elements (B), such as, for example joining elements of square cross-section or in H- or double T-shape.

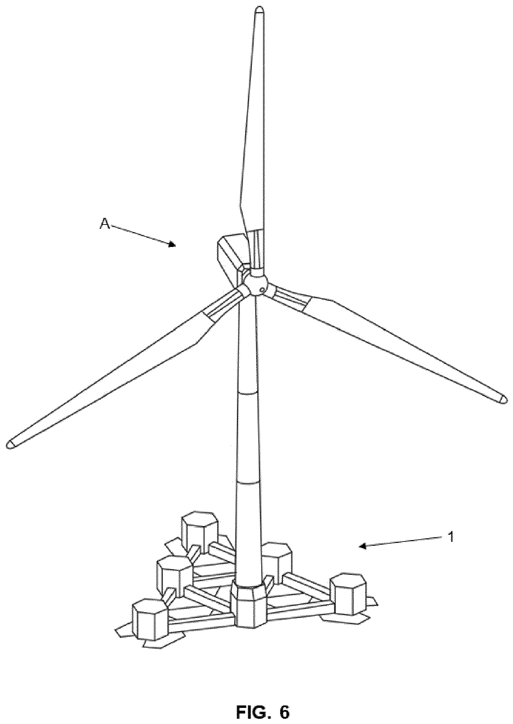

Finally, Fig. 6 shows the aspect of a wind turbine (A) supported by the platform (1) of the invention already installed in its final position.

## Claims

1. Semi-submersible floating platform (1) for marine wind turbine, **characterized in that** it comprises six columns (CV, CL) arranged essentially forming a triangle such that three vertex columns (CV) are arranged at the vertices of the triangle and three side columns (CL) are arranged at the centers of the sides of the triangle,
wherein each column (CV, CL) is connected by a joining element (B) respective to each of the adjacent columns (CV, CL), being adjacent to each vertex column (CV) the two side columns (CL) located on the sides that converge at said vertex, and being adjacent to each side column (CL) the two vertex columns (CV) belonging to said side and the remaining two side columns (CL),
wherein a side column (C_{L}) is configured to support the wind turbine (A), and
wherein those columns (C_{V}, C_{L}) other than the side column (C_{L}) configured to support the wind turbine (A) have a weight configured to bring the center of mass of the set formed by the platform (1) and wind turbine (A) to the vertical of the hull center of the platform (1).

2. Floating platform (1) according to claim 1, wherein the connections between the joining elements (B) and the columns (CV, CL) are located in a lower portion of the columns (CV, CL), so that the joining elements (B) are immersed during the lifetime of the platform (1).

3. Floating platform (1) according to any one of the preceding claims, wherein the columns (CV, CL) have the shape of a polygonal base prism such that each connection between a joining element (B) and a column (CV, CL) takes place perpendicular to a lateral side of said column (CV, CL).

4. Floating platform (1) according to claim 3, wherein the triangle is equilateral and the columns (CV, CL) have the shape of a hexagonal base prism.

5. Floating platform (1) according to any one of the preceding claims, wherein each joining element (B) comprises a single arm having a rectangular-shaped cross section.

6. Floating platform (1) according to any one of the preceding claims, wherein the interior of the joining elements (B) comprises passageways configured for the passage of people between some columns (CV, CL) and others.

7. Floating platform (1) according to any one of the preceding claims, wherein the columns (CV, CL) have a height of between 10 and 15 meters.

8. Floating platform (1) according to any one of the preceding claims, wherein the joining elements (B) have a length of between 20 and 40 meters.

9. Floating platform (1) according to any one of the preceding claims, wherein the columns (CV, CL) other than the side column (CL) configured to support the wind turbine (A) comprise ballast formed by technical water or sea water.

10. Floating platform (1) according to any one of the preceding claims, comprising an active ballast system.

11. Floating platform (1) according to any one of the preceding claims, further comprising heaving plates (PE, PI).

12. Floating platform (1) according to claim 11, comprising inner heaving plates (PI) arranged between stretches of contiguous joining elements (B), wherein said stretches are adjacent to the column (CV, CL) to which both joining elements (B) are connected, and wherein said inner heaving plates (PI) do not extend outside the triangle of the platform (1).

13. Floating platform (1) according to claim 12, wherein the inner heaving plates (PI) are triangular.

14. Floating platform (1) according to any one of claims 11-13, comprising outer heaving plates (PE) that protrude radially from the vertex columns (CV) essentially in all directions, so that at least a portion of said outer heaving plates (PE) extends outside the triangle of the platform.

15. Floating platform (1) according to claim 14, wherein the outer heaving plates (PE) have a polygonal or circular shape.
